# EUROPEAN PATENT APPLICATION

(11) **EP 4 621 971 A1**
(43) Date of publication of application: **24.09.2025**
(21) Application number: 24856801.6
(22) Date of filing: 20.08.2024
(51) Int. Cl.: H01M 50/431, H01M 50/446, H01M 50/414, H01M 50/403, H01M 10/052

(54) **SEPARATOR FOR LITHIUM SECONDARY BATTERY AND METHOD FOR MANUFACTURING SAME**

(30) Priority: 22.08.2023 KR 20230109886; 19.08.2024 KR 20240110509
(71) Applicant: LG CHEM, LTD., Seoul 07336 (KR)
(72) Inventor: KIM, Su Jun, Daejeon 34122 (KR); JIN, Sun Mi, Daejeon 34122 (KR); YU, Ingyoung, Daejeon 34122 (KR)
(74) Representative: Plasseraud IP
(86) International application number: PCT/KR2024/012384
(87) International publication number: WO 2025/042190

(57) **Abstract**

The present disclosure relates to a separator for lithium secondary battery and a method for manufacturing the same. According to the present disclosure, the separator for lithium secondary battery that can exhibit excellent insulation properties while minimizing the occurrence of defect, and a method for manufacturing the same are provided.

## Description

### [TECHNICAL FIELD]

### CROSS-REFERENCE TO RELATED APPLICATION(S)

This application claims priority to and the benefit of Korean Patent Application No. 10-2023-0109886, filed on August 22, 2023, and Korean Patent Application No. 10-2024-0110509, filed on August 19, 2024, with the Korean Intellectual Property Office, the disclosures of which are incorporated herein by reference in their entirety.

The present disclosure relates to a separator for lithium secondary battery and a method for manufacturing the same.

### [BACKGROUND OF ART]

With the trends toward increasing the functionality of mobile phones, laptop computers, tablet computers, mobile batteries, electric vehicles, personal mobility devices, and the like, the demand for a secondary battery serving as a driving power source thereof is steadily increasing. Particularly, lithium secondary batteries, which have high operating voltage and high energy density per unit weight, are most frequently used at present.

A lithium secondary battery generally has a structure in which an electrode assembly having a positive electrode/separator/negative electrode structure, which can be charged and discharged, is mounted in a battery case. Each of the positive electrode and the negative electrode is manufactured by applying a slurry including an electrode active material or the like to one surface or both surfaces of a metal current collector, drying the slurry, and rolling the metal current collector having the dried slurry applied thereto.

The separator is one of the most important factors that affect the lifespan of a secondary battery. It is necessary for the separator to exhibit ion permeability and mechanical strength such that an electrolytic solution can pass smoothly through the separator. As the applications of high-energy lithium secondary batteries are expanded, safety of the separator at high temperature is also needed.

Conventionally, a separator including a substrate and an inorganic coating layer has a problem in that the force of adhesion between the separator and an electrode is not sufficient due to its material characteristics, whereby the separator and the electrode are locally separated from each other or wrinkles are formed at the interface between the separator and the electrode. Polyolefin commonly used as the substrate has a problem with thermal stability, such as being melted at a high temperature.

In order to solve these problems, a method of constructing a separator by using only an inorganic coating film without the substrate has been proposed. However, such a separator still does not have sufficient adhesive force with electrodes and has significantly low insulating characteristics, whereby the separator is vulnerable to an internal short circuit when applying to an electrochemical device. Such a separator is easily torn due to the low tensile force and low elongation thereof. As a result, there is a fatal drawback in that a micro-scale short circuit occurs in an electrode assembly.

### [DETAILED DESCRIPTION OF THE INVENTION]

### [Technical Problem]

It is an object of the present disclosure to provide a separator for lithium secondary battery that can exhibit excellent insulation properties while minimizing the occurrence of defect.

It is an object of the present disclosure to provide a method for manufacturing the separator for a lithium secondary battery.

### [Technical Solution]

According to an embodiment of the present disclosure, there is provided a separator for lithium secondary battery comprising:
a porous polymer substrate, and a porous coating layer formed on the porous polymer substrate,
wherein the porous coating layer comprises a polymer binder and inorganic fine particles dispersed within the polymer binder, and
wherein the inorganic fine particles comprise two or more types of inorganic fine particles having different green densities measured under the same pressure conditions.

According to another embodiment of the present disclosure, there is provided a method for manufacturing the separator for lithium secondary battery, the method comprising:
applying a slurry containing a polymer binder, inorganic fine particles and a solvent onto a porous polymer substrate to form a porous coating layer,
wherein the inorganic fine particles comprise two or more types of inorganic fine particles having different green densities measured under the same pressure conditions.

Now, a separator for lithium secondary battery and a method for manufacturing the same according to specific embodiments of the present disclosure will be described in more detail.

Terms or words used in the present specification and claims should not be construed as limited to ordinary or dictionary terms, and the present invention should be construed with meanings and concepts that are consistent with the technical idea of the present disclosure based on the principle that the inventors can appropriately define concepts of the terms to appropriately describe their own invention in the best way.

Unless defined otherwise, all technical and scientific terms used herein have the same meaning as commonly understood by one of ordinary skill in the art to which this invention belongs. The terms used herein are for the purpose of describing specific embodiments only and is not intended to limit the scope of the invention.

The singular forms "a," "an" and "the" used herein are intended to include plural forms, unless the context clearly indicates otherwise.

It should be understood that the terms "comprise," "include", "have", etc. are used herein to specify the presence of stated feature, region, integer, step, action, element and/or component, but do not preclude the presence or addition of other feature, region, integer, step, action, element, component and/or group.

While the present invention can be modified in various ways and take on various alternative forms, specific embodiments thereof are illustrated and described in detail below. However, it should be understood that there is no intent to limit the present invention to the particular forms disclosed, but on the contrary, the present invention covers all modifications, equivalents, and alternatives falling within the spirit and scope of the present invention.

In describing a position relationship, for example, when the position relationship is described as 'upon~', 'above~', 'below~', and 'next to~', one or more other portions may be arranged between two portions unless 'just' or 'direct' is used.

In describing a time relationship, for example, when the temporal order is described as 'after~', 'subsequent~', 'next~', and 'before~', a case which is not continuous may be included unless 'just' or 'direct' is used.

As used herein, the term 'at least one' should be understood to include any and all combinations of one or more of the associated listed items.

As used herein, the term 'green density' means the density (g/cm³) of the green pellet which is produced by filling a mold with a specific amount of inorganic particles and applying pressure.

As used herein, the terms including ordinal numbers such as "a first", "a second", etc. are used only for the purpose of distinguishing one component from another component, and are not limited by the ordinal numbers. For instance, a first component may be referred to as a second component, or similarly, the second component may be referred to as the first component, without departing from the scope of the present disclosure.

According to an embodiment of the present disclosure, there is provided a separator for lithium secondary battery comprising:
a porous polymer substrate, and a porous coating layer formed on the porous polymer substrate,
wherein the porous coating layer comprises a polymer binder and inorganic fine particles dispersed within the polymer binder, and
wherein the inorganic fine particles comprise two or more types of inorganic fine particles having different green densities measured under the same pressure conditions.

Continuous research results of the present inventors showed that a separator for lithium secondary battery satisfying the above properties can exhibit excellent insulation properties while minimizing the occurrence of defect.

In particular, as the porous coating layer includes two or more types of inorganic fine particles having different green densities, the porous coating layer can be imparted with a dense pore structure and high pore tortuosity. Such a porous coating layer can exhibit low resistance and high ionic conductivity while minimizing the occurrence of defect. In addition, the porous coating layer can also form a uniform potential in the separator for lithium secondary battery, thereby enabling the exhibition of excellent insulating properties.

The separator for lithium secondary battery includes a porous polymer substrate and a porous coating layer formed on the porous polymer substrate.

The porous polymer substrate may be used without any particular limitation as long as it has high porosity that allows lithium ions to move between both electrodes and does not induce a chemical change in the lithium secondary battery.

According to an embodiment, the porous polymer substrate may comprise at least one polymer selected from the group consisting of polyethylene, polypropylene, polyethylene terephthalate, polypropylene terephthalate, polybutylene terephthalate, polyester, polyacetal, polyamide, polycarbonate, polyimide, polyamideimide, polyetherimide, polyetheretherketone, polyethersulfone, polyphenylene oxide, polyphenylene sulfide, and polyethylene naphthalate.

According to an embodiment, the porous polymer substrate may have a thickness of 5 *µ*m to 100 *µ*m. In order to secure the mechanical properties required as the substrate, the thickness of the porous polymer substrate is preferably 5 *µ*m or more. However, if the substrate is too thick, the ion conductivity may decrease, which may cause a decrease in the performance of the lithium secondary battery. Therefore, the thickness of the porous polymer substrate is preferably 100 *µ*m or less.

According to an embodiment, the porous polymer substrate may preferably have a tensile strength of 300 kgf/cm² to 1000 kgf/cm² in the machine direction(MD) and the transverse direction(TD), respectively. In order to prevent defects from occurring from the porous polymer substrate during the manufacturing and operation of the lithium secondary battery, the porous polymer substrate preferably satisfies the tensile strength range.

Meanwhile, the separator for lithium secondary battery includes a porous coating layer stacked on the porous polymer substrate.

According to an embodiment, the porous coating layer includes a polymer binder and inorganic fine particles dispersed within the polymer binder.

The polymer binder may be gelated when impregnated with a liquid electrolyte, and exhibit a high degree of swelling. The electrolyte injected after assembling a lithium secondary battery permeates into the polymer binder, and the polymer binder holding the absorbed electrolyte has electrolyte ion conducting capability. Therefore, a polymer having a solubility index of 15 to 45 MPa^{1/2} may be preferably applied as the polymer binder.

As an example, the polymer binder may be at least one compound selected from the group consisting of polyvinylidene fluoride, poly(vinylidene fluoride-co-trichloroethylene), poly(vinylidene fluoride-co-chlorotrifluoroethylene), poly(vinylidene fluoride-co-trifluoroethylene), poly(vinylidene fluoride-co-tetrafluoroethylene), poly(vinylidene fluoride-co-hexafluoropropylene), spandex, butylacrylate, polymethylmethacrylate, polyacrylonitrile, polyvinylpyrrolidone, and polyvinylacetate.

As another example, the binder may further include at least one compound selected from the group consisting of polyimide, polyetherimide, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pululan, carboxymethyl cellulose, acrylonitrile-styrene-butadiene copolymer, ethylene-propylene-diene terpolymer, sulfonated ethylene-propylene-diene terpolymer, styrene butadiene rubber, and fluororubber, together with the above-mentioned exemplary compound.

The inorganic fine particles form micropores by an empty space between the particles, maintain their physical shape at high temperatures, and are electrochemically stable.

According to an embodiment, the inorganic fine particles comprise two or more types of inorganic fine particles having different green densities measured under the same pressure conditions. Alternatively, the inorganic fine particles may be composed of two types of inorganic fine particles having different green densities measured under the same pressure conditions.

The green density of the inorganic fine particles is the density of the green pellet produced by filling a mold with a specific amount of inorganic particles and applying pressure, and may vary depending on the material of the inorganic fine particles, the shape of the particles, the size of the particles, or the porosity of the particles.

As the porous coating layer includes two or more types of inorganic fine particles having different green densities, the porous coating layer can be imparted with a dense pore structure and high pore tortuosity. Such a porous coating layer can exhibit low resistance and high ionic conductivity while minimizing the occurrence of defect. In addition, the porous coating layer enables the formation of a uniform potential in the separator for lithium secondary battery, thereby enabling the exhibition of excellent insulating properties.

According to an embodiment, the inorganic fine particles may include first inorganic fine particles having a green density of 1.2 g/cm³ to 1.5 g/cm³ measured under a pressure of 1 ton/cm², and second inorganic fine particles having a green density of 0.7 g/cm³ to 1.1 g/cm³ measured under a pressure of 1 ton/cm².

Here, the size of the mold applied for the formation of the first and second inorganic fine particles and the amount of respective inorganic fine particles are the same. As an example, when 1 g of any inorganic fine particle is filled in a cylindrical mold having a diameter of 16 mm and a pressure of 1 ton/cm² is applied to produce a green pellet, the first and second inorganic fine particles satisfying the above green density range can be preferably applied.

Specifically, the first inorganic fine particles may have a green density of 1.20 g/cm³ or more, or 1.21 g/cm³ or more, or 1.22 g/cm³ or more, or 1.23 g/cm³ or more, or 1.24 g/cm³ or more, or 1.25 g/cm³ or more, or 1.26 g/cm³ or more, or 1.27 g/cm³ or more, or 1.28 g/cm³ or more, or 1.29 g/cm³ or more, or 1.30 g/cm³ or more, or 1.31 g/cm³ or more, or 1.32 g/cm³ or more, or 1.33 g/cm³ or more, or 1.34 g/cm³ or more, or 1.35 g/cm³ or more; and 1.50 g/cm³ or less, or 1.49 g/cm³ or less, or 1.48 g/cm³ or less, or 1.47 g/cm³ or less, or 1.46 g/cm³ or less. And, the second inorganic fine particles may have a green density of 0.70 g/cm³ or more, or 0.71 g/cm³ or more, or 0.72 g/cm³ or more, or 0.73 g/cm³ or more, or 0.74 g/cm³ or more, or 0.75 g/cm³ or more, or 0.76 g/cm³ or more, or 0.77 g/cm³ or more, or 0.78 g/cm³ or more, or 0.79 g/cm³ or more, or 0.80 g/cm³ or more; and 1.10 g/cm³ or less, or 1.09 g/cm³ or less, or 1.08 g/cm³ or less, or 1.07 g/cm³ or less, or 1.06 g/cm³ or less, or 1.05 g/cm³ or less, or 1.04 g/cm³ or less, or 1.03 g/cm³ or less, or 1.02 g/cm³ or less, or 1.01 g/cm³ or less, or 1.00 g/cm³ or less.

Preferably, the first inorganic fine particles may have a green density of 1.20 g/cm³ to 1.50 g/cm³, or 1.21 g/cm³ to 1.50 g/cm³, or 1.22 g/cm³ to 1.50 g/cm³, or 1.23 g/cm³ to 1.50 g/cm³, or 1.24 g/cm³ to 1.50 g/cm³, or 1.25 g/cm³ to 1.50 g/cm³, or 1.25 g/cm³ to 1.49 g/cm³, or 1.25 g/cm³ to 1.48 g/cm³, or 1.26 g/cm³ to 1.48 g/cm³, or 1.27 g/cm³ to 1.48 g/cm³, or 1.28 g/cm³ to 1.48 g/cm³, or 1.29 g/cm³ to 1.48 g/cm³, or 1.30 g/cm³ to 1.48 g/cm³, or 1.30 g/cm³ to 1.47 g/cm³, or 1.30 g/cm³ to 1.46 g/cm³, or 1.31 g/cm³ to 1.46 g/cm³, or 1.32 g/cm³ to 1.46 g/cm³, or 1.33 g/cm³ to 1.46 g/cm³, or 1.34 g/cm³ to 1.46 g/cm³, or 1.35 g/cm³ to 1.46 g/cm³. And, the second inorganic particles may have a green density of 0.70 g/cm³ to 1.10 g/cm³, or 0.71 g/cm³ to 1.10 g/cm³, or 0.72 g/cm³ to 1.10 g/cm³, or 0.73 g/cm³ to 1.10 g/cm³, or 0.74 g/cm³ to 1.10 g/cm³, or 0.75 g/cm³ to 1.10 g/cm³, or 0.75 g/cm³ to 1.09 g/cm³, or 0.75 g/cm³ to 1.08 g/cm³, or 0.75 g/cm³ to 1.07 g/cm³, or 0.75 g/cm³ to 1.06 g/cm³, or 0.75 g/cm³ to 1.05 g/cm³, or 0.76 g/cm³ to 1.05 g/cm³, or 0.77 g/cm³ to 1.05 g/cm³, or 0.78 g/cm³ to 1.05 g/cm³, or 0.79 g/cm³ to 1.05 g/cm³, or 0.80 g/cm³ to 1.05 g/cm³, or 0.80 g/cm³ to 1.04 g/cm³, or 0.80 g/cm³ to 1.03 g/cm³, or 0.80 g/cm³ to 1.02 g/cm³, or 0.80 g/cm³ to 1.01 g/cm³, or 0.80 g/cm³ to 1.00 g/cm³.

In order to impart a dense pore structure and high pore tortuosity to the porous coating layer, the porous coating layer preferably includes first and second inorganic fine particles that satisfy the above green density range.

However, if the green density of the first and second inorganic fine particles is outside the above range, a dense pore structure may not be formed in the porous coating layer, and thus a non-uniform potential may be formed in the separator for lithium secondary battery. In addition, if the green density of the first and second inorganic fine particles does not satisfy the above range, an appropriate level of tortuosity may not be imparted, and thus the possibility of defect occurring in the porous coating layer may increase and the resistance may increase.

In an embodiment, the difference in the green density between the first and second inorganic fine particles may be 0.20 or more, or 0.21 or more, or 0.22 or more, or 0.23 or more, or 0.24 or more, or 0.25 or more, or 0.26 or more, or 0.27 or more, or 0.28 or more, or 0.29 or more, or 0.30 or more, or 0.31 or more, or 0.32 or more, or 0.33 or more, or 0.34 or more, or 0.35 or more, and 0.80 or less, or 0.79 or less, or 0.78 or less, or 0.77 or less, or 0.76 or less, or 0.75 or less, or 0.74 or less, or 0.73 or less, or 0.72 or less, or 0.71 or less, or 0.70 or less, or 0.69 or less, or 0.68 or less, or 0.67 or less, or 0.66 or less, or 0.65 or less.

In order to impart a dense pore structure and high pore tortuosity to the porous coating layer, the difference in the density between the first and second inorganic fine particles is preferably 0.20 or more, or 0.21 or more, or 0.22 or more, or 0.23 or more, or 0.24 or more, or 0.25 or more, or 0.26 or more, or 0.27 or more, or 0.28 or more, or 0.29 or more, or 0.30 or more, or 0.31 or more, or 0.32 or more, or 0.33 or more, or 0.34 or more, or 0.35 or more.

However, if the difference in the green density between the first and second inorganic fine particles is excessively large, a dense pore structure may not be formed in the porous coating layer, and an appropriate level of tortuosity may not be imparted. Therefore, the difference in the green density between the first and second inorganic fine particles is preferably 0.80 or less, or 0.79 or less, or 0.78 or less, or 0.77 or less, or 0.76 or less, or 0.75 or less, or 0.74 or less, or 0.73 or less, or 0.72 or less, or 0.71 or less, or 0.70 or less, or 0.69 or less, or 0.68 or less, or 0.67 or less, or 0.66 or less, or 0.65 or less.

Preferably, the difference in the green density between the first and second inorganic fine particles may be 0.20 to 0.80, or 0.21 to 0.80, or 0.22 to 0.80, or 0.23 to 0.80, or 0.24 to 0.80, or 0.25 to 0.80, or 0.25 to 0.79, or 0.25 to 0.78, or 0.25 to 0.77, or 0.25 to 0.76, or 0.25 to 0.75, or 0.26 to 0.75, or 0.27 to 0.75, or 0.28 to 0.75, or 0.29 to 0.75, or 0.30 to 0.75, or 0.30 to 0.74, or 0.30 to 0.73, or 0.30 to 0.72, or 0.30 to 0.71, or 0.30 to 0.70, or 0.31 to 0.70, or 0.32 to 0.70, or 0.33 to 0.70, or 0.34 to 0.70, or 0.35 to 0.70, or 0.35 to 0.69, or 0.35 to 0.68, or 0.35 to 0.67, or 0.35 to 0.66, or 0.35 to 0.65.

According to an embodiment, the first inorganic fine particles may have a Brunauer-Emmett-Teller(BET) specific surface area of 40 m²/g to 80 m²/g by nitrogen adsorption/desorption, and the second inorganic fine particles may have a Brunauer-Emmitt-Teller(BET) specific surface area of 90 m²/g to 120 m²/g by nitrogen adsorption/desorption.

Specifically, the first inorganic fine particles may have a Brunauer-Emmett-Teller(BET) specific surface area of 40 m²/g or more, or 41 m²/g or more, or 42 m²/g or more, or 43 m²/g or more, or 44 m²/g or more, or 45 m²/g or more; and 80 m²/g or less, or 79 m²/g or less, or 78 m²/g or less, or 77 m²/g or less, or 76 m²/g or less, or 75 m²/g or less, or 74 m²/g or less, or 73 m²/g or less, or 72 m²/g or less, or 71 m²/g or less, or 70 m²/g or less by nitrogen adsorption/desorption. And, the second inorganic fine particles may have a Brunauer-Emmett-Teller(BET) specific surface area of 90 m²/g or more, or 91 m²/g or more, or 92 m²/g or more, or 93 m²/g or more, or 94 m²/g or more, or 95 m²/g or more; and 120 m²/g or less, or 119 m²/g or less, or 118 m²/g or less by nitrogen adsorption/desorption.

In order to impart a dense pore structure and high pore tortuosity to the porous coating layer, the porous coating layer preferably include first and second inorganic fine particles that satisfy the BET specific surface area range. However, if the BET specific surface area of the first and second inorganic fine particles is outside the range, a dense pore structure may not be formed in the porous coating layer, and an appropriate level of tortuosity may not be imparted.

Preferably, the first inorganic fine particles may have a BET specific surface area of 40 m²/g to 80 m²/g, or 41 m²/g to 80 m²/g, or 42 m²/g to 80 m²/g, or 42 m²/g to 79 m²/g, or 42 m²/g to 78 m²/g, or 42 m²/g to 77 m²/g, or 42 m²/g to 76 m²/g, or 42 m²/g to 75 m²/g, or 43 m²/g to 75 m²/g, or 44 m²/g to 75 m²/g, or 45 m²/g to 75 m²/g, or 45 m²/g to 74 m²/g, or 45 m²/g to 73 m²/g, or 45 m²/g to 72 m²/g, or 45 m²/g to 71 m²/g, or 45 m²/g to 70 m²/g by nitrogen adsorption/desorption. And, the second inorganic fine particles may have a BET specific surface area of 90 m²/g to 120 m²/g, or 91 m²/g to 120 m²/g, or 92 m²/g to 120 m²/g, or 93 m²/g to 120 m²/g, or 94 m²/g to 120 m²/g, or 95 m²/g to 120 m²/g, or 95 m²/g to 119 m²/g, or 95 m²/g to 118 m²/g by nitrogen adsorption/desorption.

The first inorganic fine particles may have a green density of 1.2 g/cm³ to 1.5 g/cm³ measured under a pressure of 1 ton/cm² and a Brunauer-Emmett-Teller(BET) specific surface area of 40 m²/g to 80 m²/g by nitrogen adsorption/desorption. And, the second inorganic fine particles may have a green density of 0.7 g/cm³ to 1.1 g/cm³ measured under a pressure of 1 ton/cm² and a Brunauer-Emmett-Teller(BET) specific surface area of 90 m²/g to 120 m²/g by nitrogen adsorption/desorption.

According to an embodiment, the first inorganic fine particles may have a primary particle diameter of 40 nm to 70 nm, or 45 nm to 70 nm, or 45 nm to 65 nm; and the second inorganic fine particles may have a primary particle diameter of 10 nm to 35 nm, or 15 nm to 35 nm, or 20 nm to 35 nm.

And, the first inorganic fine particles may have a secondary particle diameter of 250 nm to 550 nm, or 260 nm to 550 nm, or 260 nm to 540 nm, or 270 nm to 540 nm, or 270 nm to 530 nm; and the second inorganic fine particles may have a secondary particle diameter of 50 nm to 230 nm, or 60 nm to 230 nm, or 70 nm to 230 nm, or 70 nm to 220 nm, or 70 nm to 210 nm, or 70 nm to 200 nm, or 80 nm to 200 nm, or 90 nm to 200 nm, or 100 nm to 200 nm, or 100 nm to 190 nm, or 100 nm to 180 nm.

In order to secure the appropriate dispersibility and pore size of the inorganic fine particles in the porous coating layer but to prevent the thickness of the porous coating layer from being too thick, the porous coating layer preferably includes first and second inorganic fine particles that satisfy the primary particle diameter range and the secondary particle diameter range.

The particle diameter of the inorganic fine particles can be confirmed through a scanning electron microscope image(SEM) or a transmission electron microscope image(TEM) taken of a cross section of the porous coating layer.

The first inorganic fine particles may have a green density of 1.2 g/cm³ to 1.5 g/cm³ measured under a pressure of 1 ton/cm² and a secondary particle diameter of 250 nm to 550 nm. And, the second inorganic fine particles may have a green density of 0.7 g/cm³ to 1.1 g/cm³ measured under a pressure of 1 ton/cm² and a secondary particle diameter of 50 nm to 230 nm.

The first inorganic fine particles may have a green density of 1.2 g/cm³ to 1.5 g/cm³ measured under a pressure of 1 ton/cm², a Brunauer-Emmett-Teller(BET) specific surface area of 40 m²/g to 80 m²/g by nitrogen adsorption/desorption, and a secondary particle diameter of 250 nm to 550 nm. And, the second inorganic fine particles may have a green density of 0.7 g/cm³ to 1.1 g/cm³ measured under a pressure of 1 ton/cm², a Brunauer-Emmett-Teller(BET) specific surface area of 90 m²/g to 120 m²/g by nitrogen adsorption/desorption, and a secondary particle diameter of 50 nm to 230 nm.

According to an embodiment, the inorganic fine particles may have a particle shape selected from the group consisting of acicular particles, angular particles, dendritic particles, fibrous particles, flaky particles, granular particles, irregular particles, nodular particles, and spheroidal particles.

Preferably, the first inorganic fine particles and the second inorganic fine particles may have particle shapes different from each other.

As an example, the first inorganic fine particle may be an angular particle, and the second inorganic fine particle may be an acicular particle. As another example, the first inorganic fine particle may be an irregular particle, and the second inorganic fine particle may be a fibrous particle.

However, since the green density of the inorganic fine particles may vary depending on the material of the inorganic fine particles, the shape of the particles, the size of the particles, or the porosity of the particles, the first inorganic fine particles and the second inorganic fine particles do not necessarily have to have different shapes.

According to an embodiment, the inorganic fine particle may include the first inorganic fine particle and the second inorganic fine particle in a weight ratio of 1:1 to 100:1.

Specifically, the inorganic fine particles may include the first inorganic fine particles and the second inorganic fine particles in a weight ratio of 1:1 to 100:1, or 1:1 to 80:1, or 1:1 to 60:1, or 1:1 to 40:1, or 1:1 to 20:1, or 1:1 to 10:1.

In order to impart a dense pore structure and high pore tortuosity to the porous coating layer, the inorganic fine particles preferably include the first inorganic fine particles and the second inorganic fine particles in the weight ratio range.

However, if the weight ratio of the first and second inorganic fine particles is outside the above range, a dense pore structure may not be formed in the porous coating layer, and an appropriate level of tortuosity may not be imparted.

According to an embodiment, it is preferable that the inorganic fine particles undergo no oxidation and/or reduction reaction in the operating voltage range of a secondary battery (e.g., 0 ~ 5V based on Li/Li+). The inorganic fine particles preferably have a high electrolyte ion transfer capability. The inorganic fine particles preferably have a density as low as possible so that they can be well dispersed within the polymer binder. In addition, the inorganic fine particles preferably have a high dielectric constant so that they can contribute to an increase in the dissociation degree of electrolyte salts in the electrolyte.

Preferably, the inorganic fine particles may be one or more selected from the group consisting of inorganic particles having a dielectric constant of 1 or more, inorganic particles having piezoelectricity, and inorganic particles having lithium ion transfer capability.

In one example, inorganic particles such as SrTiO₃, SnO₂, CeO₂, MgO, NiO, CaO, ZnO, ZrO₂, Y₂O₃, Al₂O₃, boehmite(AlO(OH)), Al(OH)₃, TiO₂, and SiC have a dielectric constant of 1 or more, and thus can be preferably applied as the inorganic fine particles.

In another example, the inorganic particles having piezoelectricity are nonconductors at normal pressure, but are materials that exhibit electrical conductivity due to changes in their internal structure when a certain pressure is applied. The piezoelectric inorganic particles have high dielectric constant characteristics with a dielectric constant of 100 or more. In addition, when the piezoelectric inorganic particles are stretched or compressed under the application of a certain range of pressure, they generate an electric charge so that one surface is charged positively(+) and the other surface is charged negatively(-), thereby generating a electric potential difference between the two surfaces. Due to the above characteristics that the piezoelectric inorganic particles have, when an internal short circuit occurs in the electrode of a secondary battery due to external impacts, it is possible to prevent direct contact between the positive electrode and the negative electrode, and to gradually reduce voltage and improve safety. As the piezoelectric inorganic particles, inorganic particles such as BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃-PbTiO₃ (PMN-PT), and HfO₂ can be preferably applied.

In yet another example, the inorganic particle having the lithium ion transport capability refers to an inorganic particle that contains lithium element but has the function of moving lithium ions without storing lithium. The inorganic particles having lithium ion transport capability enable improvement of lithium ion conductivity in the battery. Examples of such inorganic particles include inorganic particles such as Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

Preferably, the inorganic fine particles may be one or more selected from the group consisting of SrTiO₃, SnO₂, CeO₂, MgO, NiO, CaO, ZnO, ZrO₂, Y₂O₃, Al₂O₃, AlO(OH), Al(OH)₃, TiO₂, SiC, BaTiO₃, Pb(Zr,Ti)O₃, Pb₁₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

According to an embodiment, the inorganic fine particles include the first inorganic fine particles and the second inorganic fine particles having different green densities measured under the same pressure conditions; and the first and second inorganic fine particles may have particle shapes different from each other, and may be composed of the same type of components.

According to an embodiment, the porous coating layer may include 1 to 90 wt.% of the polymer binder and 10 to 99 wt.% of the inorganic fine particles. In order to impart an appropriate porosity and insulation properties to the porous coating layer, the inorganic fine particles are preferably included in an amount of 10 wt.% or more. However, if the inorganic fine particles are included in an excessive amount, the mechanical properties of the porous coating layer may deteriorate due to weakened adhesiveness. Therefore, the inorganic fine particles are preferably included in an amount of 99 wt.% or less.

According to one embodiment, the thickness of the porous coating layer is preferably adjusted in a range of 2 *µ*m to 100 *µ*m, or 2 *µ*m to 80 *µ*m, or 2 *µ*m to 50 *µ*m, or 2 *µ*m to 20 *µ*m in order to exhibit appropriate performance.

Meanwhile, according to another embodiment of the present disclosure, there is provided a method for manufacturing the separator for lithium secondary battery, the method comprising:
applying a slurry containing a polymer binder, inorganic fine particles and a solvent onto a porous polymer substrate to form a porous coating layer,
wherein the inorganic fine particles comprise two or more types of inorganic fine particles having different green densities measured under the same pressure conditions.

The separator for lithium secondary battery can be provided through the manufacturing method.

In the step of forming the porous coating layer, the porous polymer substrate, the polymer binder, and the inorganic fine particles are replaced with the contents described above, respectively.

According to an embodiment, the slurry including the polymer binder, the inorganic fine particles and a solvent can be obtained by first preparing a dispersion in which two or more types of inorganic fine particles having different green densities are dispersed in the solvent, and then mixing the polymer binder into the dispersion.

According to an embodiment, the solvent contained in the slurry may be preferably a solvent that exhibits a solubility of 1 wt.% or more, or 2.5 wt.% or more, or 5 wt.% or more, or 7.5 wt.% or more, or 10 wt.% or more in the polymer binder at room temperature (25°C).

Preferably, the solvent may be at least one selected from the group consisting of methyl acetate, ethyl acetate, γ-butyrolactone, ε-caprolactone, dibutyl ether, tetrahydrofuran, cyclohexanone, benzene, fluorobenzene, N-methyl-2-pyrrolidone, dimethyl carbonate, diethyl carbonate, methyl ethyl carbonate, ethyl methyl carbonate, ethylene carbonate, propylene carbonate, dimethylformamide, 1,3-dioxolane, and sulfolane.

According to an embodiment, the slurry preferably has a solid content of 20 wt.% to 80 wt.%.

If the solid content of the slurry is too high, it may cause an increase in viscosity, which may prevent the slurry from penetrating into the pore area of the porous polymer substrate, thereby reducing the interfacial adhesion between the porous polymer substrate and the porous coating layer. However, if the solid content of the slurry is too low, pinholes may occur during coating of the slurry, and the drying efficiency of the slurry coating may be reduced.

Specifically, the solid content of the slurry may be 20 wt.% or more; and 80 wt.% or less, or 70 wt.% or less, or 60 wt.% or less. Preferably, the solid content of the slurry may be 20 wt.% to 80 wt.%, or 20 wt.% to 70 wt.%, or 20 wt.% to 60 wt.%.

The slurry including the polymer binder, the inorganic fine particles and the solvent is coated on the porous polymer substrate.

As a coating method of the slurry, a conventional method known in the technical field to which the present disclosure belongs can be applied. For example, spin coating, dip coating, die coating, roll coating, comma coating, gravure coating, bar coating, curtain coating, screen printing, inkjet printing, doctor blading, or a combination thereof can be used for coating the slurry.

In the coating step of the slurry, the thickness of the coating layer formed on the porous polymer substrate can be adjusted taking into consideration the composition of the slurry and the thickness of the porous coating layer to be finally formed.

According to an embodiment, the step of forming the porous coating layer can be performed by vaporizing the solvent from the slurry coated on the porous polymer substrate.

Preferably, the step of forming the porous coating layer may be performed at a temperature of 80°C to 130°C or 80°C to 120°C. If the temperature does not satisfy the above range, the drying efficiency may decrease or the shape of the porous polymer substrate or the porous coating layer may change to cause defects.

According to an embodiment, the porous coating layer formed by the method may include 1 to 90 wt.% of the polymer binder and 10 to 99 wt.% of the inorganic fine particles. In order to impart an appropriate porosity and insulation properties to the porous coating layer, the inorganic fine particles are preferably included in an amount of 10 wt.% or more. However, if the inorganic fine particles are included in an excessive amount, the adhesive strength may be weakened and the mechanical properties of the porous coating layer may be reduced. Therefore, it is preferable that the inorganic fine particles are included in an amount of 99 wt.% or less.

According to yet another embodiment of the present disclosure, a lithium secondary battery including the above-mentioned separator for lithium secondary battery is provided.

As an example, the lithium secondary battery may include: an electrode assembly including the separator for lithium secondary battery interposed between two electrodes; an electrolyte impregnated in the electrode assembly; and a battery case that seals and houses the electrode assembly and the electrolyte.

As the lithium ion secondary battery comprises the above-mentioned electrode assembly, it can exhibit excellent durability and stable performance.

The lithium ion secondary battery may have various shapes, such as a prismatic shape, a cylindrical shape, or pouch shape.

The lithium ion secondary battery can be used as an energy source having improved performance and safety in the field of portable electronic devices such as mobile phones, notebook computers, tablet computers, mobile batteries, and digital cameras; and the field of transport means such as electric vehicles, electric motorcycles, and personal mobility devices.

The two electrodes included in the lithium secondary battery each include an electrode current collector layer and an electrode active material layer stacked on the electrode current collector layer.

An electrode current collector that is known in the technical field to which the present disclosure pertains to have conductivity while not causing any chemical change in a lithium ion secondary battery may be applied to the electrode current collector layer. In one example, the electrode current collector that may be used includes stainless steel; aluminum; nickel; titanium; fired carbon; or an aluminum or stainless steel whose surface is treated with carbon, nickel, titanium, silver, etc.

Preferably, the electrode current collector may have a thickness of 3 *µ*m to 500 *µ*m. The electrode current collector may form fine protrusions and depressions on the surface thereof to enhance the adhesive force with the electrode material. The electrode current collector can be used in various forms such as a film, a sheet, a foil, a net, a porous body, a foaming body, and a non-woven fabric structure.

The electrode active material layer includes an electrode material composition that is a mixture of an electrode active material, a conductive material and a binder.

The conductive material may be used for imparting electronic conductivity to the electrode.

The conductive material may be used without particular limitation as long as it has electronic conductivity while not causing any chemical change in a lithium ion secondary battery. As a non-limiting example, the conductive material may include carbon-based materials such as carbon black, acetylene black, ketjen black, channel black, furnace black, lamp black, thermal black and carbon fiber; graphite such as natural graphite and artificial graphite; metal powder or metal fibers such as copper, nickel, aluminum and silver; conductive whisker such as zinc oxide and potassium titanate; conductive metal oxides such as titanium oxide; or a conductive polymer such as a polyphenylene derivative. As the conductive material, any one alone or a mixture of two or more of the above-mentioned examples may be used.

The content of the conductive material may be adjusted within a range that does not cause a decrease in capacity of the battery while exhibiting an appropriate level of conductivity. Preferably, the content of the conductive material may be 1% by weight to 10% by weight, or 1% by weight to 5% by weight based on the total weight of the electrode material composition.

The binder is used for properly attaching the electrode material composition to the electrode current collector.

As non-limiting examples, the binder may include polyvinyl alcohol, polyacrylate, carboxymethyl cellulose, hydroxypropyl cellulose, diacetylcellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, nylon resin, and the like. As the binder, one or a mixture of two or more of the examples described above may be used.

The content of the binder may be adjusted within a range that does not cause a decrease in capacity of the battery while exhibiting an appropriate level of adhesive property. Preferably, the content of the binder may be 1% by weight to 10% by weight, or 1% by weight to 5% by weight based on the total weight of the electrode material composition.

When the electrode is a positive electrode, the positive electrode active material can be used without particular limitation as long as it is a material capable of reversibly intercalating/deintercalating lithium ions.

In one example, the positive electrode active material may be a composite oxide or phosphate containing cobalt, manganese, nickel, iron, or a combination of lithium and these metals.

In another example, the positive electrode active material may be a compound represented by any one of the following chemical formulas: LiₐA_{1-b}R_{b}D₂ (0.90≤a≤1.8, 0≤b≤0.5); LiₐE_{1-b}R_{b}O_{2-c}D_{c} (0.90≤a≤1.8, 0≤b≤0.5, 0≤c≤0.05); LiE_{2-b}R_{b}O_{4-c}D_{c} (0≤b≤0.5, 0≤c≤0.05); LiₐNi_{1-b-c}Co_{b}R_{c}D_{d} (0.90≤a≤1.8, 0≤b≤0.5, 0≤c≤0.05, 0<d≤2); LiₐNi_{1-b-c}Co_{b}R_{c}O_{2-d}Z_{d} (0.90≤a≤1.8, 0≤b≤0.5, 0≤c≤0.05, 0<d<2); LiₐNi_{1-b-c}Co_{b}R_{c}O_{2-d}Z₂ (0.90≤a≤1.8, 0≤b≤0.5, 0≤c≤0.05, 0<d<2); LiₐNi_{1-b-c}Mn_{b}R_{c}D_{d} (0.90≤a≤1.8, 0≤b≤0.5, 0≤c≤0.05, 0<d≤2); LiₐNi_{1-b-c}Mn_{b}R_{c}O_{2-d}Z_{d} (0.90≤a≤1.8, 0≤b≤0.5, 0≤c≤0.05, 0<d<2); LiₐNi_{1-b-c}Mn_{b}R_{c}O_{2-d}Z₂ (0.90≤a≤1.8, 0≤b≤0.5, 0≤c≤0.05, 0<d<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}Mn_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiTO₂; LiNiVO₄; Li_{(3-f)}J₂(PO₄)₃ (0≤f≤2); Li_{(3-f)}Fe₂(PO₄)₃ (0≤f≤2); and LiFePO₄.

In the above chemical formulas, A is Ni, Co, Mn or a combination thereof; R is Al, Ni, Co, Mn, Cr, Fe, Mg, Sr, V, a rare earth element or a combination thereof; D is O, F, S, P or a combination thereof; E is Co, Mn or a combination thereof; Z is F, S, P or a combination thereof; G is Al, Cr, Mn, Fe, Mg, La, Ce, Sr, V or combinations thereof; Q is Ti, Mo, Mn or a combination thereof; T is Cr, V, Fe, Sc, Y or a combination thereof; and J is V, Cr, Mn, Co, Ni, Cu or combinations thereof.

Those having a coating layer on the surface of the positive electrode active material can be used, or a mixture of the positive electrode active material and a positive electrode active material having a coating layer can be used. As the coating element included in the coating layer, Mg, Al, Co, K, Na, Ca, Si, Ti, V, Sn, Ge, Ga, B, As, Zr, or a mixture thereof can be used.

According to one embodiment, the positive electrode active material may be contained in an amount of 80% to 95% by weight based on the total weight of the electrode material composition. Preferably, the content of the positive electrode active material may be 82% by weight to 95% by weight, or 82% by weight to 93% by weight, or 85% by weight to 93% by weight, or 85% by weight to 90% by weight, based on the total weight of the electrode material composition.

When the electrode is a negative electrode, the negative electrode active material may include a material capable of reversibly intercalating/deintercalating lithium ions, a lithium metal, a lithium metal alloy, a material capable of doping and dedoping lithium, and a transition metal oxide.

As the material capable of reversibly intercalating and de-intercalating lithium ions, crystalline carbon, amorphous carbon, or a mixture thereof may be exemplified as a carbonaceous material. Specifically, the carbonaceous material may be natural graphite, artificial graphite, Kish graphite, pyrolytic carbon, mesophase pitches, mesophase pitch-based carbon fiber, meso-carbon microbeads, petroleum or coal tar pitch derived cokes, soft carbon, hard carbon, and the like.

The lithium metal alloy may include an alloy of lithium and a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material capable of doping and dedoping lithium may include Si, a Si-C composite, SiOₓ (0<x<2), a Si-Q alloy (wherein Q is an element selected from the group consisting of alkali metals, alkali earth metals, group 13 elements, group 14 elements, group 15 elements, group 16 elements, transition metals, rare earth elements, and a combination thereof, but is not Si), Sn, SnO₂, Sn-R (wherein R is an element selected from the group consisting of alkali metals, alkali earth metals, group 13 elements, group 14 elements, group 15 elements, group 16 elements, transition metals, rare earth elements, and a combination thereof, but is not Sn), and the like. In addition, as the material capable of doping and dedoping lithium, at least one of the above examples can also be mixed with SiO₂ and then used. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and the like.

And, the transition metal oxide may include vanadium oxide, lithium vanadium oxide, lithium titanium oxide, and the like.

Preferably, the negative electrode active material may include one or more compounds selected from the group consisting of a carbonaceous material and a silicon compound. Here, the carbonaceous material is a material containing at least one selected from the group consisting of natural graphite, artificial graphite, Kish graphite, pyrolytic carbon, mesophase pitches, mesophase pitch-based carbon fiber, meso-carbon microbeads, petroleum or coal tar pitch derived cokes, soft carbon, and hard carbon, as previously exemplified. In addition, the silicon compound may be a compound containing Si previously exemplified, that is, Si, a Si-C composite, SiOₓ (wherein 0<x<2), the Si-Q alloy, mixtures thereof, or a mixture of at least one thereof and SiO₂.

According to one embodiment, the negative electrode active material may be contained in an amount of 85% by weight to 98% by weight based on the total weight of the electrode material composition. Preferably, the content of the negative electrode active material may be 85% by weight to 97% by weight, or 87% by weight to 97% by weight, or 87% by weight to 95% by weight, or 90% by weight to 95% by weight based on the total weight of the negative electrode material composition.

According to one embodiment, the thickness of the electrode active material layer is preferably adjusted in the range of 5 *µ*m to 500 *µ*m, or 5 *µ*m to 450 *µ*m, or 10 *µ*m to 450 *µ*m in order to realize appropriate performance.

According to one embodiment, the electrolyte can be used without particular limitation as long as it is known to be applicable to lithium ion secondary batteries in the technical field to which the present invention pertains. For example, the electrolyte may be an organic liquid electrolyte, an inorganic liquid electrolyte, a solid polymer electrolyte, a gel-type polymer electrolyte, a solid inorganic electrolyte, a molten inorganic electrolyte, or the like.

Specifically, the electrolyte may include a non-aqueous organic solvent and a lithium salt.

The non-aqueous organic solvent can be used without particular limitation as long as it can serve as a medium through which ions involved in the electrochemical reaction of the battery can move.

Specifically, the non-aqueous organic solvent includes an ester-based solvent such as methyl acetate, ethyl acetate, γ-butyrolactone, and ε-caprolactone; an ether-based solvent such as dibutyl ether and tetrahydrofuran; a ketone-based solvent such as cyclohexanone; an aromatic hydrocarbon-based solvent such as benzene and fluorobenzene; a carbonate-based solvent such as dimethyl carbonate(DMC), diethyl carbonate(DEC), methyl ethyl carbonate(MEC), ethyl methyl carbonate(EMC), ethylene carbonate(EC), and propylene carbonate(PC); an alcohol-based solvent such as ethyl alcohol and isopropyl alcohol; nitriles such as R-CN (wherein R is a C2 to C20 linear, branched or cyclic hydrocarbon group, which may contain a double-bonded aromatic ring or an ether bond); amides such as dimethylformamide; dioxolanes such as 1,3-dioxolane; sulfolane, and the like.

Among the above examples, a carbonate-based solvent can be preferably used as the non-aqueous organic solvent.

In particular, considering the charge and discharge performance of the battery and compatibility with the above positive electrode material, the non-aqueous organic solvent may be preferably a mixture of a cyclic carbonate having high ionic conductivity and a high dielectric constant (e.g., ethylene carbonate and propylene carbonate) and a linear carbonate having low viscosity carbonates (e.g., ethyl methyl carbonate, dimethyl carbonate, and diethyl carbonate). In this case, mixing and using the cyclic carbonate and the linear carbonate at a volume ratio of 1:1 to 1:9 may be advantageous for achieving the above-mentioned performance.

In addition, as the non-aqueous organic solvent, a solvent in which ethylene carbonate(EC) and ethyl methyl carbonate(EMC) are mixed at a volume ratio of 1:2 to 1:10; or a solvent in which ethylene carbonate(EC), ethyl methyl carbonate(EMC) and dimethyl carbonate(DMC) are mixed in a volume ratio of 1~3:1~9:1 can be preferably used.

The lithium salt contained in the electrolyte is dissolved in the non-aqueous organic solvent and acts as a source of lithium ions in the battery, which enables basic operation of the lithium ion secondary battery and facilitates movement of lithium ions between the positive electrode and the negative electrode.

The lithium salt may include LiPF₆, LiClO₄, LiAsF₆, LiBF₄, LiSbF₆, LiAlO₄, LiAICl₄, LiCF₃SO₃, LiC₄F₉SO₃, LiN(C₂F₅SO₃)₂, LiN(C₂F₅SO₂)₂, LiN(CF₃SO₂)₂, LiFSI, LiTFSI, LiCl, Lil, and LiB(C₂O₄)₂, and the like. Specifically, the lithium salt may be LiPF₆, LiFSI, LiTFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Optionally, the electrolyte may contain additives for the purpose of improving battery life characteristics, suppressing decrease of capacity in the battery, improving battery discharge capacity, and the like.

For example, the additive may include a haloalkylene carbonate-based compound such as difluoroethylene carbonate; or pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride, and the like. The additive may be contained in an amount of 0.1% by weight to 5% by weight with respect to the total weight of the electrolyte.

### [ADVANTAGEOUS EFFECTS]

According to the present disclosure, there is provided a separator for lithium secondary battery that exhibits excellent insulating properties while minimizing the occurrence of defect, and a method for manufacturing the same.

### [BRIEF DESCRIPTION OF THE DRAWINGS]

FIG. 1 is a scanning electron microscope(SEM) image of the surface of the porous coating layer in the separator for lithium secondary battery according to Example 1 of the present disclosure.
FIG. 2 is an SEM image of the surface of the porous coating layer in the separator for lithium secondary battery according to Example 2 of the present disclosure.
FIG. 3 is an SEM image of the surface of the porous coating layer in the separator for lithium secondary battery according to Comparative Example 1 of the present disclosure.
FIG. 4 is an SEM image of the surface of the porous coating layer in the separator for lithium secondary battery according to Comparative Example 4 of the present disclosure.

### [DETAILED DESCRIPTION OF THE EMBODIMENTS]

Hereinafter, actions and effects of the invention will be described in more detail with reference to specific examples. However, the following examples are given to assist the understanding of the invention, and are not intended to limit the scope of the invention in any sense. It will be apparent to those skilled in the art that various modifications and variations can be made in the present disclosure without departing from the scope or spirit of the invention.

### Example 1

### (1) Manufacturing of separator

As the inorganic fine particles, an angular boehmite (AlO(OH); green density: 1.35g/cm³; BET specific surface area by nitrogen adsorption/desorption: 63m²/g; primary particle diameter: 50 nm; secondary particle diameter: 350 nm) and an acicular boehmite (AlO(OH); green density: 0.99g/cm³; BET specific surface area by nitrogen adsorption/desorption: 101m²/g; primary particle diameter: 30 nm; secondary particle diameter: 155 nm) were prepared.

A mixture of 9.0 g of the angular boehmite and 1.0 g of the acicular boehmite was dispersed in N-methyl-2-pyrrolidone(NMP) to prepare a dispersion. Poly(vinylidene fluoride-co-hexafluoropropylene) as a polymer binder was added to the dispersion, and uniformly mixed using a homogenizer to prepare a slurry having a solid content of 20%.

The slurry was applied onto a porous polyethylene substrate (manufacturer: Senior) having a thickness of 9 *µ*m using a dual slot die, and then the solvent was vaporized at 80°C to form a porous coating layer having a thickness of 6 *µ*m. The composition of the porous coating layer was composed of 90 wt.% of the inorganic fine particles and 10 wt.% of the polymer binder.

### (2) Manufacturing of negative electrode part

An electrode material composition comprising 95.6 wt.% of an active material consisting of 90 wt.% of graphite active material, which is a mixture of artificial graphite and natural graphite in a ratio of 3:7, and 10 wt.% of SiO; 1 wt.% of acetylene black as a conductive material; and 1.1 wt.% of carboxymethyl cellulose(CMC) and 2.3 wt.% of styrene butadiene rubber(SBR) as a binder was prepared. The electrode material composition was applied to one surface of a copper current collector having a thickness of 8*µ*m using a comma coater. This was dried and rolled at 130°C to prepare a negative electrode plate having a negative electrode active material layer stacked thereon. The negative electrode active material layer was formed with a porosity of 24% and a thickness of 44*µ*m. The negative electrode plate was punched to a size of 31 x 43 mm using a die puncher to manufacture a negative electrode part.

### (3) Manufacturing of positive electrode part

A mixture comprising 94 wt.% LiNiCoMnO₂ (Ni:Co:Mn=8:1:1) as a positive electrode active material, 3 wt.% of conductive carbon black (Super P; IMERYS Graphite & Carbon) as a conductive material, and 3 wt.% of polyvinylidene fluoride as a binder was added to NMP and uniformly dispersed to prepare a slurry. The slurry was applied to one surface of an aluminum current collector, dried and rolled to prepare a positive electrode plate having a positive electrode active material layer stacked thereon. The positive electrode plate was punched into a size of 30 x 42 mm using a die puncher to manufacture a positive electrode part.

### (4) Manufacturing of battery

The negative electrode part, the separator, and the positive electrode part were sequentially stacked, and pressed and laminated at 90°C to manufacture an electrode assembly. The electrode assembly was housed in a pouch to form a small cell, and an electrolyte was injected into the pouch to manufacture five lithium secondary batteries.

At this time, the electrolyte used was prepared by dissolving 0.5M of LiFSI, 0.7M of LiPF₆, and 2 wt.% of vinylene carbonate(VC) in a non-aqueous organic solvent in which ethylene carbonate(EC) and ethyl methyl carbonate(EMC) were mixed in a volume ratio of 3:7.

### Example 2

A separator and a lithium secondary battery including the same were manufactured in the same manner as in Example 1, except that a mixture of 5.0 g of the angular boehmite and 5.0 g of the acicular boehmite was used as the inorganic fine particles when manufacturing the separator.

### Example 3

A separator and a lithium secondary battery including the same were manufactured in the same manner as in Example 1, except that 9.0 g of angular boehmite (AlO(OH); green density: 1.46 g/cm³; BET specific surface area by nitrogen adsorption/desorption: 45 m²/g; primary particle diameter: 65 nm; secondary particle diameter: 500 nm) and 1.0 g of acicular boehmite (AlO(OH); green density: 0.81 g/cm³; BET specific surface area by nitrogen adsorption/desorption: 118 m²/g; primary particle diameter: 25 nm; secondary particle diameter: 136 nm) were used instead of the mixture of the angular boehmite and the acicular boehmite as the inorganic fine particles when manufacturing the separator.

### Comparative Example 1

A separator and a lithium secondary battery including the same were manufactured in the same manner as in Example 1, except that 10.0 g of the angular boehmite (AlO(OH); green density: 1.35 g/cm³; BET specific surface area by nitrogen adsorption/desorption: 63 m²/g; primary particle diameter: 50 nm; secondary particle diameter: 350 nm) was used alone instead of the mixture of the angular boehmite and the acicular boehmite as the inorganic fine particles when manufacturing the separator.

### Comparative Example 2

A separator and a lithium secondary battery including the same were manufactured in the same manner as in Example 1, except that 10.0 g of the acicular boehmite (AlO(OH); green density: 0.99 g/cm³; BET specific surface area by nitrogen adsorption/desorption: 101 m²/g; primary particle diameter: 30 nm; secondary particle diameter: 155 nm) was used alone instead of the mixture of the angular boehmite and the acicular boehmite as the inorganic fine particles when manufacturing the separator.

### Comparative Example 3

A separator and a lithium secondary battery including the same were manufactured in the same manner as in Example 1, except that 10.0 g of the angular boehmite (AlO(OH); green density: 1.38 g/cm³; BET specific surface area by nitrogen adsorption/desorption: 18 m²/g; primary particle diameter: 300 nm; secondary particle diameter: 700 nm) was used alone instead of the mixture of the angular boehmite and the acicular boehmite as the inorganic fine particles when manufacturing the separator.

### Comparative Example 4

A separator and a lithium secondary battery including the same were manufactured in the same manner as in Example 1, except that 10.0 g of alumina (Al₂O₃; green density: 2.05 g/cm³; BET specific surface area by nitrogen adsorption/desorption: 6.4 m²/g; primary particle diameter: 350 nm; secondary particle diameter: 900 nm) was used alone instead of the mixture of the angular boehmite and the acicular boehmite as the inorganic fine particles when manufacturing the separator.

### Experimental Example 1

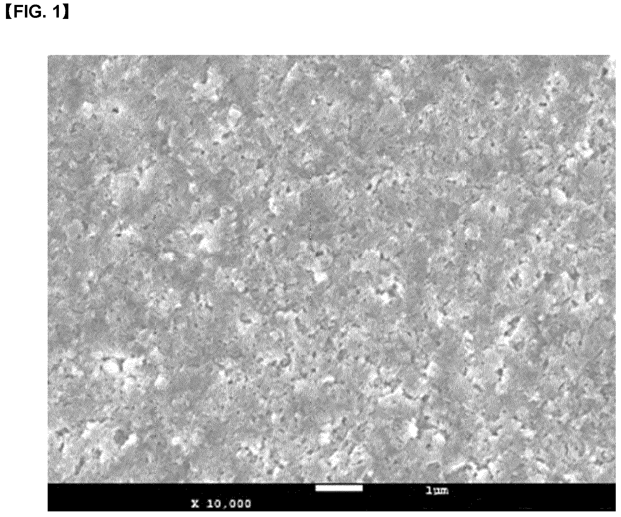

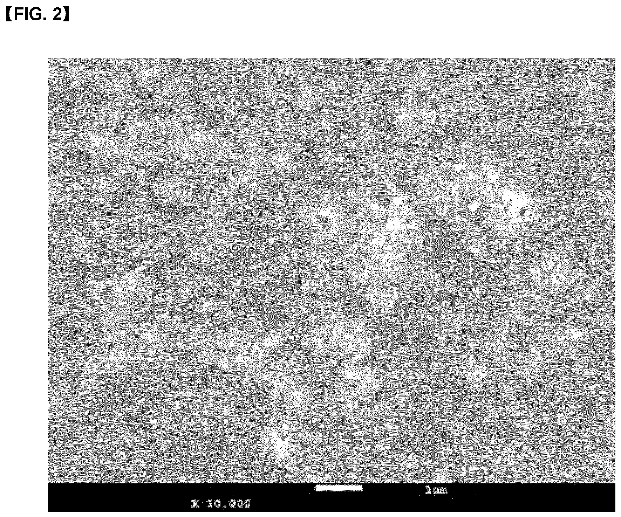

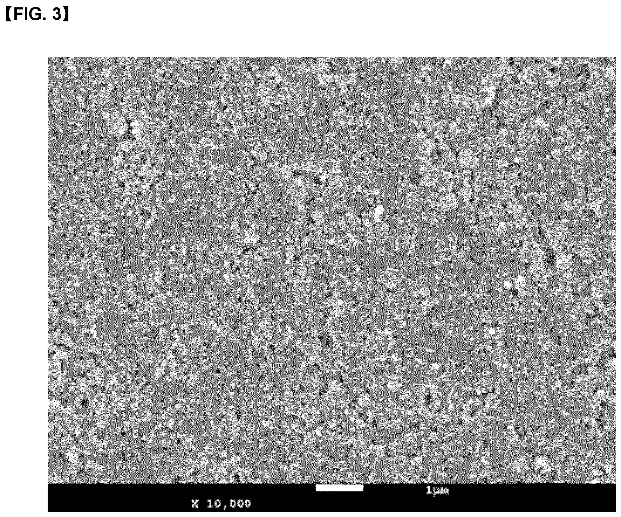

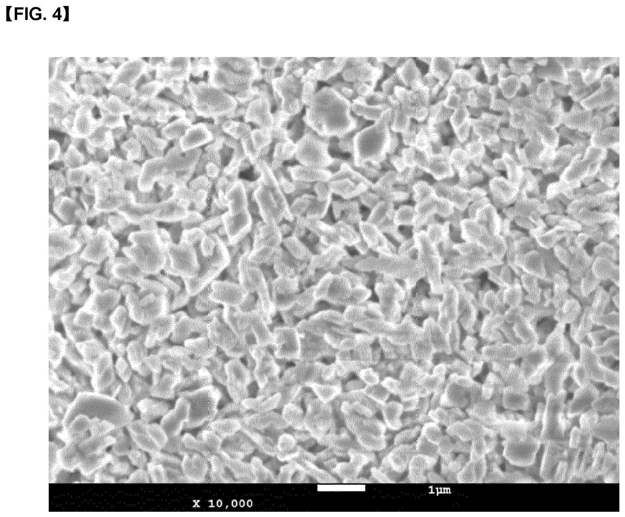

The surface of the porous coating layer formed on the separators according to Examples 1 and 2 and Comparative Examples 1 and 4 was observed using a scanning electron microscope, and the results are shown in FIG. 1 (Example 1), FIG. 2 (Example 2), FIG. 3 (Comparative Example 1), and FIG. 4 (Comparative Example 4).

Referring to FIGS. 1 and 2, it can be observed that in the porous coating layer according to Examples, inorganic particles were uniformly distributed on the surface, and small pores were densely formed.

On the other hand, referring to FIGS. 3 and 4, the porous coating layers according to Comparative Examples 1 and 4 have larger pore sizes and non-uniform surface shapes compared to Examples.

### Experimental Example 2

The green density of each of the inorganic fine particles used in Examples and Comparative Examples was obtained by the following method.

A cylindrical mold with a diameter of 16 mm was filled with 1 g of inorganic fine particles, and a pressure of 1 ton/cm² was applied to produce a green pellet. The green density (g/cm³) was calculated from the volume measurement value of the green pellet and the weight (1 g) of the green pellet.

### Experimental Example 3

The Brunauer-Emmett-Teller(BET) specific surface area by nitrogen adsorption/desorption of the inorganic fine particles used in Examples and Comparative Examples was measured using a surface area analyzer (BEL Japan Inc., BELSORP-max). In the measurement of the properties, the temperature of the air oven attached to the analyzer was maintained at 40 °C.

### Experimental Example 4

The dielectric breakdown voltage (kV/mil) of the porous coating layer was measured for the lithium secondary batteries (5 samples each) obtained in Examples and Comparative Examples by the following method. The maximum voltage allowed before dielectric breakdown occurred was measured at a voltage increase rate of 100 V/sec using a Hi-pot meter (Chroma 19055). The measured maximum voltage was divided by the thickness of the porous coating layer to calculate the maximum voltage allowed per unit thickness, which is shown in Table 1 below.

### Experimental Example 5

The resistance (ohm) of the porous coating layer was measured for the lithium secondary batteries (5 samples each) obtained in Examples and Comparative Examples by the following method. The resistance of the porous coating layer was measured by the Nyquist plot method using electrochemical impedance spectroscopy (EIS) under AC voltage conditions of an amplitude of 10 Mv and a frequency of 104~105 Hz.

### Experimental Example 6

The air permeability (sec/100cc) of the separators manufactured in Examples and Comparative Examples was measured by the following method. The separator were mounted to an air-permeability tester device according to the method of JIS P8117, and the time required for 100 cc of air to permeate the separator under a certain pressure was measured.

**[Table 1]**

| | Dielectric breakdown voltage (kV/mil) | Resistance (ohm) | Air permeability (sec/100cc) |
|---|---|---|---|
| Example 1 | 4.26 | 0.74 | 122.4 |
| Example 2 | 4.42 | 0.76 | 135.0 |
| Example 3 | 4.46 | 0.75 | 120.1 |
| Comparative Example 1 | 3.81 | 0.76 | 121.3 |
| Comparative Example 2 | 3.99 | 0.80 | 156.5 |
| Comparative Example 3 | 3.78 | 0.75 | 114.8 |
| Comparative Example 4 | 3.70 | 0.75 | 107.5 |

Referring to the results of Experimental Examples, it was confirmed that the porous coating layers according to Examples had high tortuosity and thus exhibited high dielectric breakdown voltage.

On the other hand, the porous coating layers according to Comparative Examples exhibited poor dielectric breakdown voltage compared to Examples.

While the present disclosure has been particularly shown and described with reference to several embodiments and illustrative drawings, the present disclosure is not limited to these embodiments, and it would be apparent to those skilled in the art that many modifications and variations can be made without departing from the spirit and scope of the invention as defined by the appended claims.

## Claims

1. A separator for a lithium secondary battery comprising:
a porous polymer substrate, and a porous coating layer formed on the porous polymer substrate,
wherein the porous coating layer comprises a polymer binder and inorganic fine particles dispersed within the polymer binder, and
wherein the inorganic fine particles comprise two or more types of inorganic fine particles having different green densities measured under the same pressure conditions.

2. The separator for a lithium secondary battery according to claim 1, wherein the inorganic fine particles comprise,
first inorganic fine particles having a green density of 1.2 g/cm³ to 1.5 g/cm³ measured under a pressure of 1 ton/cm², and
second inorganic fine particles having a green density of 0.7 g/cm³ to 1.1 g/cm³ measured under a pressure of 1 ton/cm².

3. The separator for a lithium secondary battery according to claim 1, wherein the inorganic fine particles comprise,
first inorganic fine particles having a Brunauer-Emmett-Teller BET specific surface area of 40 m²/g to 80 m²/g by nitrogen adsorption/desorption, and
second inorganic fine particles having a Brunauer-Emmitt-Teller BET specific surface area of 90 m²/g to 120 m²/g by nitrogen adsorption/desorption.

4. The separator for a lithium secondary battery according to claim 1, wherein the inorganic fine particles comprise,
first inorganic fine particles having a secondary particle diameter of 250 nm to 550 nm, and
second inorganic fine particles having a secondary particle diameter of 50 nm to 230 nm.

5. The separator for a lithium secondary battery according to claim 2, wherein the first inorganic fine particles and the second inorganic fine particles have particle shapes different from each other.

6. The separator for a lithium secondary battery according to claim 5, wherein the first inorganic fine particles and the second inorganic fine particles are composed of the same type of components.

7. The separator for a lithium secondary battery according to claim 5, wherein:
the first inorganic fine particles are angular particles, and
the second inorganic fine particles are acicular particles.

8. The separator for a lithium secondary battery according to claim 2, wherein the inorganic fine particles comprise the first inorganic fine particles and the second inorganic fine particles in a weight ratio of 1:1 to 100:1.

9. The separator for a lithium secondary battery according to claim 1, wherein the inorganic fine particles are at least one selected from the group consisting of SrTiO₃, SnO₂, CeO₂, MgO, NiO, CaO, ZnO, ZrO₂, Y₂O₃, Al₂O₃, boehmite (AlO(OH)), Al(OH)₃, TiO₂, SiC, BaTiO₃, Pb(Zr,Ti)O₃, Pb₁₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

10. The separator for a lithium secondary battery according to claim 1, wherein the polymer binder is at least one compound selected from the group consisting of polyvinylidene fluoride, poly(vinylidene fluoride-co-trichloroethylene), poly(vinylidene fluoride-co-chlorotrifluoroethylene), poly(vinylidene fluoride-co-trifluoroethylene), poly(vinylidene fluoride-co-tetrafluoroethylene), poly(vinylidene fluoride-co-hexafluoropropylene), spandex, butylacrylate, polymethylmethacrylate, polyacrylonitrile, polyvinylpyrrolidone, and polyvinylacetate.

11. The separator for a lithium secondary battery according to claim 1, wherein the porous coating layer comprises 1 wt.% to 90 wt.% of the polymer binder and 10 wt.% to 99 wt.% of the inorganic fine particles.

12. The separator for a lithium secondary battery according to claim 1, wherein the porous polymer substrate comprises at least one polymer selected from the group consisting of polyethylene, polypropylene, polyethylene terephthalate, polypropylene terephthalate, polybutylene terephthalate, polyester, polyacetal, polyamide, polycarbonate, polyimide, polyamideimide, polyetherimide, polyetheretherketone, polyethersulfone, polyphenylene oxide, polyphenylene sulfide, and polyethylene naphthalate.

13. A method for manufacturing the separator for a lithium secondary battery according to claim 1, the method comprising:
applying a slurry containing the polymer binder, the inorganic fine particles and a solvent onto the porous polymer substrate to form the porous coating layer,
wherein the inorganic fine particles comprise two or more types of inorganic fine particles having different green densities measured under the same pressure conditions.

14. The method for manufacturing the separator for a lithium secondary battery according to claim 13, wherein the slurry has a solid content of 20 wt.% to 80 wt.%.

15. The method for manufacturing the separator a for lithium secondary battery according to claim 13, wherein the solvent is at least one selected from the group consisting of methyl acetate, ethyl acetate, γ-butyrolactone, ε-caprolactone, dibutyl ether, tetrahydrofuran, cyclohexanone, benzene, fluorobenzene, N-methyl-2-pyrrolidone, dimethyl carbonate, diethyl carbonate, methyl ethyl carbonate, ethyl methyl carbonate, ethylene carbonate, propylene carbonate, dimethylformamide, 1,3-dioxolane, and sulfolane.

16. The method for manufacturing the separator for a lithium secondary battery according to claim 13, wherein the forming the porous coating layer is carried out by vaporizing the solvent from the slurry coated on the porous polymer substrate at 80°C to 130°C.

17. A lithium secondary battery comprising the separator for a lithium secondary battery according to claim 1.
